(19) **Europäisches Patentamt**
**European Patent Office**
**Office européen des brevets**

(11) **EP 2 720 025 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(51) Int Cl.:
*G01N 19/04* *(2006.01)*        *G01N 3/00* *(2006.01)*
*B23K 11/10* *(2006.01)*

(21) Anmeldenummer: **13187974.4**

(22) Anmeldetag: **09.10.2013**

(54) **Auswahlverfahren für Blechdicken und Materialgütenkombinationen für kopf- und scherzugbelastete Schweißpunkte**

Selection method for sheet metal thicknesses and material quality combinations for welding points under tearing and shearing loads.

Procédé de sélection d'épaisseurs de lame métallique et combinaisons de qualités de matériaux pour des points de soudure sollicités en arrachement et en cisaillement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2012 DE 102012109765**

(43) Veröffentlichungstag der Anmeldung:
**16.04.2014 Patentblatt 2014/16**

(73) Patentinhaber: **ThyssenKrupp Steel Europe AG
47166 Duisburg (DE)**

(72) Erfinder: **Hinz, Martin
47661 Issum (DE)**

(74) Vertreter: **Cohausz & Florack
Patent- & Rechtsanwälte
Partnerschaftsgesellschaft mbB
Bleichstraße 14
40211 Düsseldorf (DE)**

(56) Entgegenhaltungen:
• **HAMIDINEJAD S M ET AL: "The modeling and process analysis of resistance spot welding on galvanized steel sheets used in car body manufacturing", MATERIALS AND DESIGN, LONDON, GB, Bd. 34, 28. Juni 2011 (2011-06-28), Seiten 759-767, XP028325267, ISSN: 0261-3069, DOI: 10.1016/J.MATDES.2011.06.064 [gefunden am 2011-07-07]**

• **YANG H ET AL: "An experimental investigation on critical specimen sizes of high strength steels DP600 in resistance spot welding", MATERIALS AND DESIGN, LONDON, GB, Bd. 29, Nr. 9, 1. Oktober 2008 (2008-10-01), Seiten 1679-1684, XP022715688, ISSN: 0261-3069, DOI: 10.1016/J.MATDES.2008.04.009 [gefunden am 2008-04-08]**

• **DANCETTE S ET AL: "Experimental and modeling investigation of the failure resistance of Advanced High Strength Steels spot welds", ENGINEERING FRACTURE MECHANICS, PERGAMON PRESS, NEW YORK, NY, GB, Bd. 78, Nr. 10, 22. April 2011 (2011-04-22), Seiten 2259-2272, XP028223491, ISSN: 0013-7944, DOI: 10.1016/J.ENGFRACMECH.2011.04.013 [gefunden am 2011-04-28]**

• **LUO Y ET AL: "Regression modeling and process analysis of resistance spot welding on galvanized steel sheet", MATERIALS AND DESIGN, LONDON, GB, Bd. 30, Nr. 7, 1. August 2009 (2009-08-01), Seiten 2547-2555, XP026099231, ISSN: 0261-3069, DOI: 10.1016/J.MATDES.2008.09.031 [gefunden am 2008-09-30]**

## Beschreibung

Die Erfindung betrifft ein Verfahren zur Bestimmung der maximalen Zugkraft einer Verbindung von gefügten Blechen aus einer Materialgüte in Abhängigkeit von mehreren Schweißparametern zur Bereitstellung von maximalen Traglastwerten für gefügte Bauteilverbindungen sowie ein Auswahlverfahren zur Auswahl einer Kombination von Blechdicken und Materialgüten für spezifisch vorgegebene Traglastbedingungen bei kopfzug- oder scherzugbelasteten Schweißpunkten.

Bei Fahrzeugkarosserien werden viele Schweißpunkte durch die Verwendung des Widerstandsschweißpunktverfahrens verwendet. Je nach Position des Schweißpunktes und des betreffenden Bauteils können unterschiedlich hohe Scherzug- und/oder Kopfzugkräfte auftreten, welche somit spezifische Anforderungen an die Blechdicken sowie die zu verwendeten Materialgüten und Schweißprozess stellen. Ein Versagen eines Schweißpunktes kann beispielsweise bei crashrelevanten Bauteilen zu einer reduzierten Insassensicherheit führen, so dass bei diesen Bauteilen eine besonders hohe Sorgfalt bei der Auswahl der Werkstoffe und Blechdicken und Schweißpunktparametern angewendet wird. Darüber hinaus sind aber auch weitere Randbedingungen für die Karosserie zu berücksichtigen, beispielsweise Kosten und Gewicht der verwendeten Bleche. Neben der Blechdicke und der Materialgüte hat auch der Schweißpunktdurchmesser einen erheblichen
Einfluss auf die von der Schweißverbindung auszuhaltenden Traglasten. Die maximalen Traglastanforderungen können bei der Konstruktion der Fahrzeugkarosserien oder aber auch bei der Konstruktion von Bauteilen, die Schweißpunktverbindungen enthalten simuliert und damit berechnet werden. Welche Bleche und welcher Schweißpunktdurchmesser zu verwenden sind, wurde bisher empirisch ermittelt. Es wurde herausgefunden, dass die maximale Traglast einer Schweißpunktverbindung zwar nahezu linear mit dem Schweißpunktdurchmesser zusammenhängt. Diese Abhängigkeit ändert sich jedoch mit zunehmender Blechdicke, in dem die Steigung je Blechdicke ansteigt. Eine Vorhersage des Verhaltens über verschiedenen Blechdicken hinaus war bisher nicht möglich. In der Vergangenheit wurde daher zu jeder in Frage kommenden Blechdicke eine Reihe von Scherzug- bzw. Kopfzugversuchen durchgeführt, um die richtige Kombination an Blechdicke, Materialgüte und Schweißpunktdurchmesser herauszufinden. Zwangsläufig war also eine hohe Anzahl an Versuchen notwendig, um für spezifische Anforderungen die verwendbaren Kombinationen aus Blechdicken und Materialgüten auszuwählen. Insbesondere war es nicht möglich, für spezifische Anforderungen das Verhalten der Schweißpunktverbindungen innerhalb von Blechdickenintervallen vorherzusagen. Ein Verfahren zum automatisierten Auswählen von Blechen für Umformprozesse ist zwar aus der europäischen Patentschrift EP 1392 455 B1 bekannt, diese beschäftigt sich aber mit Umformprozessen und gibt keine Hinweise auf Schweißpunktverbindungen.

Des Weiteren ist aus der Veröffentlichung "The modeling and process analysis of resistance spot welding on galvanized steel sheets used in car body manufacturing" (Hamidinejad et al.) ein Verfahren zur Bestimmung von maximalen Traglastwerten für Blechverbindungen von Blechen au seiner Materialgüte in Abhängigkeit von mehreren Schweißparametern bekannt, wobei eine lineare Anpassungsfunktion verwendet wird, die die empirische Abhänigkeit des maximalen Traglastwerts der Schweißparameter beschreibt.

Schließlich beschreiben die Veröffentlichungen "An experimental investigation on critical specimen sizes of high strength steels DP600 in resistance spot welding" (Yang et al.), "Experimental and modeling investigation of the failure resistance of Advanced High Strength Steels spot welds" (Dancette et al.) und "Regression modeling and process analysis of resistance spot welding on galvanized steel sheet" (Luo Yi et al.) den Einfluss von Blechdicke und Schweißpunktdurchmesser auf den maximalen Traglastwert.

Demgegenüber hat sich die vorliegende Erfindung die Aufgabe gestellt, ein Verfahren zur Bestimmung der maximalen Traglast für Blechverbindungen von Blechen aus einer Materialgüte in Abhängigkeit von der Blechdicke $t$ und des Schweißpunktdurchmessers $dp$ zur Verfügung zu stellen, so dass eine einfache Auswahl an Blechdicken, Materialgüten und Schweißpunktdurchmessern getroffen werden kann, um die vorbestimmten Anforderungen an die Schweißpunktverbindung zu erfüllen. Darüber hinaus liegt der vorliegenden Erfindung die Aufgabe zugrunde, ein Verfahren zum Auswählen einer Kombination von Blechdicken und Materialgüten für die Bereitstellung von Blechverbindungen mit einer vorbestimmten maximalen Traglast zur Verfügung zu stellen.

Gemäß einer ersten Lehre der vorliegenden Erfindung wird die aufgezeigte Aufgabe durch ein Verfahren gelöst, bei welchem die Materialgüte abhängig von der Blechdicke $t$ und des Schweißpunktdurchmessers $dp$ ist, welche in einem Blechdickenintervall $(t_i, t_{i+1})$ für eine Materialgüte gilt, bei welchem aus Kopfzug- und/oder Scherzugdaten von Blechverbindungen mit verschiedenen Schweißpunktdurchmessern unter Verwendung einer linearen Regression der Kopfzug- oder Scherzugmessdaten von mindestens zwei verschiedenen Blechdicken $t_i$ und $t_{i+1}$, welche der oberen und der unteren Grenze des Blechdickenintervalls $(t_i, t_{i+1})$ entsprechen, eine gemeinsame Funktion für die maximale Traglast $G(dp,t)$ bestimmt wird, welche für ein Blechdickenintervall $(t_i, t_{i+1})$ und eine Materialgüte gilt und die Form hat:

$$G(dp,t) = a \cdot dp + b \cdot t + c \text{ ,}$$

wobei a, b und c von dp oder t unabhängige Variablen sind,
und wobei folgende Schritte durchgeführt werden:

- Durchführen einer Mehrzahl von Scherzug- oder Kopfzugversuchen zur Messung der maximalen Zugkraft $F_{max}$ von gefügten Blechen mit verschiedenen Blechdicken im Blechdickenintervall $(t_i, t_{i+1})$ und verschiedenen Schweißpunktdurchmessern $dp$ innerhalb eines zulässigen Schweißpunktdurchmesserintervalls $(dp_{min}, dp_{max})$ bei der gleichen Materialgüte,

- Bestimmen einer linearen Regressionsfunktion der maximalen Zugkraft $F_{max,t_i}(dp)$ für mindestens zwei Blechdicken $t_i$ und $t_{i+1}$ einer Materialgüte,

- Festlegen eines Abweichungsintervalls mit oberer und unterer Grenze für die mindestens zwei Regressionsfunktionen, wobei für die obere Grenze gilt:

$$F_{\max,OG,t_i}\left(dp\right) = F_{\max,t_i}\left(dp\right) + dQ \quad \text{und}$$

für die untere Grenze gilt:

$$F_{\max,UG,t_i}\left(dp\right) = F_{\max,t_i}\left(dp\right) - dQ \quad,$$

- Bestimmung einer ersten linearen Trendfunktion $T_{t_i}(dp)$ mit der Steigung $m_{t_i}$ für eine erste Blechdicke, welche durch die Punkte $(dp_{min}/F_{\max,UG,t_i}(dp_{min}))$ und $(dp_{max}/F_{\max,OG,t_i}(dp_{max}))$ verläuft,

- Bestimmung einer zweiten linearen Trendfunktion $T_{t_{i+1}}(dp)$ mit der Steigung $m_{t_{i+1}}$ für eine zweite Blechdicke, welche durch die Punkte $(dp_{min}/F_{\max,OG,t_{i+1}}(dp_{min}))$ und $(dp_{max}/F_{\max,UG,t_{i+1}}(dp_{max}))$ verläuft,

- wobei die erste Blechdicke $t_i$ geringer als die zweite Blechdicke $t_{i+1}$ und die Steigung $m_{t_i}$ größer als die Steigung $m_{t_{i+1}}$ ist,

- Bestimmung einer weiteren Trendfunktion $G_{t_i}(dp, t_i) = m \cdot dp + b_{t_i}$ mindestens für zwei Blechdicken $t_i$ und $t_{i+1}$, mit

    a)

$$G_{t_i}((dp_{\max} + dp_{\min})/2), t_i) = F_{\max,t_i}((dp_{\max} + dp_{\min})/2)$$

    und
    b)

$$G_{t_{i+1}}(dp, t) = G_{t_i}(dp, t_i) + b(t),$$

    wobei

$$m = (m_{t_i} + m_{t_{i+1}})/2,$$

$$b(t) = b \cdot (t - t_i) \quad \text{und}$$

$$b = \frac{F_{\max,t_{i+1}}((dp_{\max} + dp_{\min})/2) - F_{\max,t_i}((dp_{\max} + dp_{\min})/2)}{t_{i+1} - t_i},$$

so dass $G_{t_{i+1}}(dp,t) = m \cdot dp + b_{t_i} + b \cdot (t - t_i)$ die maximale Zugkraft einer Blechverbindung abhängig von der Blechdicke innerhalb des Blechdickenintervalls $(t_i, t_{i+1})$ und abhängig von dem Schweißpunktdurchmesser $dp$ angibt.

Es hat sich herausgestellt das unter Verwendung der linearen Regression der Kopfzug- oder Scherzugdaten sowohl die Abhängigkeit der Traglastwerte von Schweißverbindungen abhängig vom Schweißpunktdurchmesser sowie von der Blechdicke als linear angenommen werden können, so dass für spezifische Blechdickenintervalle sowohl die Blechdickenabhängigkeit der Traglastwerte als auch die Schweißpunktdurchmesserabhängigkeit der Traglastwerte in einer einzigen Funktion darstellbar ist. In einem gegebenen Blechdickenintervall reduziert dies den Aufwand für die Kopf- bzw. Scherzugversuche erheblich, da in Blechdickenintervallen lediglich die äußeren Grenzen des Intervalls vermessen werden müssen. Der einfache Zusammenhang zwischen den Größen ermöglicht es, die maximal vorgegebene Traglast $G(dp,t)$ im Vorfeld anhand weniger Versuchsdaten für ein Blechdickenintervall von $t_i$ bis $t_{i+1}$ zu bestimmen, ohne dass empirische Versuche mit der entsprechenden Blechdicke notwendig sind. Die Anzahl der notwendigen Versuche zur Bestimmung der maximalen Traglast und der Auswahl der spezifischen Blechdicken und Materialgütenkombination wird dadurch deutlich herabgesetzt.

Die Verwendung der ersten und zweiten linearen Trendfunktion $T_i(dp)$ und $T_{i+1}(dp)$ ermöglicht es, eine gemeinsame Trendfunktion $G_{t_i}(dp,t_i)$ zu ermitteln, über welche in einem Blechdickenintervall von $t_i$ bis $t_{i+1}$ ohne weiteres eine einzige mathematische Funktion die zulässigen Traglasten einer Schweißpunktverbindung abhängig von Schweißpunktdurchmesser und der Dicke des Blechs für eine Materialgüte vorzugeben. Hierzu wird ein Abweichungsintervall $+ I\text{-}dQ$, welches die erlaubten Abweichungen von der Regressionsfunktion $F_{max,t_i}(dp)$ definiert. Die linearen Trendfunktionen $T_i(dp)$ bzw. $T_{i+1}(dp)$ haben die allgemeine Form $T_i(dp) = m_{t_i} \cdot dp + e_{t_i}$ und nutzen das Abweichungsintervall aus, um zu überprüfen, ob es möglich ist, eine gemeinsame Trendfunktion für das Blechdickenintervall zu definieren. Die Trendfunktionen $T_i(dp)$ bzw. $T_{i+1}(dp)$ schneiden die Regressionsgraden $F_{max,t_i}(dp)$ bzw. $F_{max,t_i+1}(dp)$ im Entwicklungspunkt $(dp_{min} + dp_{max})/2$ und werden derart aufgestellt, dass die Trendfunktion $T_i(dp)$ zur Regressionsfunktion $F_{max,t_i}(dp)$ mit der geringeren Steigung, in der Regel die Regressionsfunktion für die geringere Blechdicke, die maximal im Abweichungsintervall erlaubte Steigung aufweist. Umgekehrt wird auch die Trendfunktion $T_{i+1}(dp)$ für die größere Blechdicke derart bestimmt, dass diese die geringste im Abweichungsintervall mögliche Steigung aufweist. Mit der Forderung, dass die Steigung $m_{t_i}$ größer ist als die Steigung $m_{t_{i+1}}$ wird sichergestellt, dass eine gemeinsame Trendfunktion mit geringem Fehler aufgestellt werden kann, die für alle Blechdicken im Blechdickenintervall eine gemeinsame Steigung aufweist. Die Trendfunktion $G_{t_i}(dp,t_i)$ für jede einzelne Blechdicke schneidet die Regressionsgerade $F_{max,ti}(dp)$ jeder Blechdicke ebenfalls im Entwicklungspunkt, welcher in der Mitte der Schweißpunktdurchmesserintervalls $(dp_{min}, dp_{max})$ liegt, also bei $(dp_{min} + dp_{max})/2$. Hierdurch wird erreicht, dass der Fehler, welcher durch die gemeinsame Trendfunktion $G_{t_i}(dp,t_i)$ gemacht wird, möglichst gering und symmetrisch in Bezug auf die Grenzen $dp_{min}$ und $dp_{max}$ verteilt ist. Es hat sich gezeigt, dass unter Verwendung dieser Trendfunktionen $G_{t_i}(dp,t_i)$ der einzelnen Blechdicken sich eine Trendfunktion für ein Blechdickenintervall von $t_i$ bis $t_{i+1}$ aufstellen lässt, welche es ermöglicht, durch Auswahl der entsprechenden Schweißpunktdurchmessergröße bzw. der entsprechenden Blechdicke die jeweilige maximale Zugkraft mathematisch zu bestimmen und anschließend für die entsprechende Anwendung lediglich auszuwählen. Diese Trendfunktion hat die Form

$$G_{t_{i+1}}(dp,t) = m \cdot dp + b_{t_i} + b \cdot (t - t_i)$$

mit

$$m = (m_{t_i} + m_{t_{i+1}})/2 \quad \text{und} \quad b = \frac{F_{max,t_{i+1}}((dp_{max} + dp_{min})/2) - F_{max,t_i}((dp_{max} + dp_{min})/2)}{t_{i+1} - t_i}.$$

Anhand dieser Funktion kann jetzt auf einfache Weise die Auswirkung von Blechdicken und Schweißdurchmessern in einem Blechdickenintervall einer einzigen Materialgüte berechnet werden, ohne dass der Fehler der Berechnung zu groß wird. Es müssen insofern nur Scherzugversuche oder Kopfzugversuche, je nachdem, welche Belastung im Vordergrund steht, an den Grenzen des Blechdickenintervalls durchgeführt werden, um eine Vorhersage des Verhaltens im Blechdickenintervall zu ermöglichen. Bevorzugt sollten 6 bis 8 verschiedene Schweißpunktdurchmesser pro Blechdicke vermessen werden, um die Regressionsgerade zu ermitteln.

Gemäß einer weiteren Ausgestaltung des erfindungsgemäßen Verfahrens wird als Untergrenze des Schweißpunktdurchmessers $dp_{min}$ der Wert $4 \cdot \sqrt{t}$ und als Obergrenze des Schweißpunktdurchmessers $dp_{max}$ der

Wert $6 \cdot \sqrt{t}$ verwendet. Unterhalb des gewählten $dp_{min}$ besteht die Gefahr, dass keine ausreichende Schweißverbindung zwischen beiden Blechen und lediglich eine sogenannte Haftverbindung zwischen diesen erreicht wird. Oberhalb der Schweißpunktdurchmessergrenze $dp_{max}$ kann es zu ungewollten Spritzern des Schweißpunktes kommen.

Gemäß einer weiteren Ausgestaltung des Verfahrens wird die Trendfunktion $G_{t_i+1}(dp,t)$ für verschiedene Materialgüten und/oder für verschiedene Blechdickenintervalle $(t_i, t_{i+1})$ ermittelt. Hierdurch wird erreicht, dass verschiedene Materialgüten mit unterschiedlichen Blechdicken miteinander verglichen werden können, was bisher ein erhebliches Problem darstellte bzw. mit sehr großem Aufwand verbunden war. Darüber hinaus besteht bei der Verwendung unterschiedlicher Blechdickenintervalle die Möglichkeit, durch wenige Messungen große Blechdickenintervalle mit wenigen mathematischen Funktionen abzubilden. Dies ermöglicht es, die maximale Traglast für Schweißpunktverbindungen in großen Bereichen vorherzusagen und entsprechend optimierte Kombinationen aus Blechdicken und Materialgüten bereitzustellen.

Besonders bevorzugt gibt das Blechdickenintervall $(t_i, t_{i+1})$ Blechdickenwerte zwischen 0,5 mm und 2,5 mm, vorzugsweise von 1,0 mm bis 2,0 mm an. Es hat sich gezeigt, dass insbesondere bei den typischen Blechdicken, wie sie im Kraftfahrzeugbereich auftreten, nämlich im Bereich von 1,0 mm bis 2,0 mm, eine sehr gute Vorhersage der maximalen Traglast einer Schweißpunktverbindung in Abhängigkeit der Blechdicke sowie des Schweißpunktdurchmessers gelingt.

Sofern der Einfluss unterschiedlicher Materialgüten bei der Bestimmung der Trennfunktion $G_{t_i+1}(dp,t)$ ausgeschlossen werden soll, werden die verschiedenen Blechdicken im Blechdickenintervall $(t_i, t_{i+1})$ durch Herunterschleifen aus einem einzigen Blech bereitgestellt. Dies erhöht die Genauigkeit der Vorhersage der Traglastkräfte weiter.

Gemäß einer zweiten Lehre der vorliegenden Erfindung wird die oben aufgezeigte Aufgabe durch ein Verfahren zur Auswahl einer Kombination von Blechdicken und Materialgüten für die Bereitstellung von Blechverbindungen mit einer vorbestimmten maximalen Traglast gelöst, bei welchem zunächst die Trendfunktionen $G_{t_i+1}(dp,t)$ für Blechdickenintervalle $(t_i, t_{i+1})$ und für verschiedene Materialgüten erfindungsgemäß ermittelt werden und anschließend die Blechdickenkombinationen und Materialgüten durch Auswertung der Trendfunktionen $G_{t_i+1}(dp,t)$ ermittelt werden, welche die Vorgaben bezüglich der maximalen Traglast erfüllen. Es wird insofern ein automatisches Auswahlverfahren zur Verfügung gestellt, welches entsprechend der Vorgaben bezüglich der Schweißpunktverbindung, beispielsweise der zulässigen maximalen Traglast entsprechende Kombinationen an Blechdicken, Schweißpunktdurchmesser und Materialgüten zur Verfügung stellt.

Weiter optimiert werden kann das Verfahren dadurch, dass eine Kombination an Blechdicken und Materialgüte ausgewählt wird, welche die Vorgaben an die maximale Traglast bei minimalem Gewicht realisieren. Mit dem erfindungsgemäßen Verfahren ist es insofern besonders einfach eine gewichtsoptimierte Variante einer Schweißpunktverbindung bereitzustellen, welche gleichzeitig die maximale Traglast des Schweißpunktes erreicht.

Gleiches gilt auch für die Vorgabe von Zugfestigkeiten und Dehngrenzen, welche insofern zu einer spezifischen Auswahl der Materialgüte führen und bei dem erfindungsgemäßen Verfahren ohne weiteres berücksichtigt werden können. Die Vorgaben bezüglich der Zugfestigkeit $R_m$ und Dehngrenze $R_e$ der Materialgüte können auch übergeordnete Konstruktionsaspekte, beispielsweise Anforderungen an die Steifigkeit der Karosserie, berücksichtigt werden. Innerhalb der Materialgüten besteht keine Notwendigkeit mehr alle Blechdicken zu vermessen. Lediglich die Grenzen des Blechdickenintervalls $t_i$ bis $t_{i+1}$ müssen durch Versuchsergebnisse abgesichert werden.

Im Weiteren soll die Erfindung anhand von einem Ausführungsbeispiel in Verbindung mit der Zeichnung näher erläutert werden. Die Zeichnung zeigt in

Fig. 1    Scherzugmesswerte für eine Materialgüte vom Typ DX54D mit verschiedenen Blechdicken bei verschiedenen Schweißpunktdurchmessern $dp$,

Fig. 2    in einem Diagramm die Scherzugmessdaten der Blechdicke 1,0 mm, das zugehörige Abweichungsintervall und die neue Trennfunktion t 1,0,

Fig. 3    im Vergleich die Blechdicken 2,0 mm und 1,0 mm und deren Funktionen $F_{max}$, T sowie G im Vergleich,

Fig. 4    in einem Diagramm die gemeinsame Trendfunktion $G_{ti}$ für verschiedene Blechdicken,

Fig. 5    ein schematisches Ablaufdiagramm für ein Ausführungsbeispiel eines Auswahlverfahrens für Blechdicken, Schweißpunktdurchmesser und Materialgüten, und

Fig. 6    eine schematische Schnittansicht einer Scherzug- und Kopfzugversuchsanordnung.

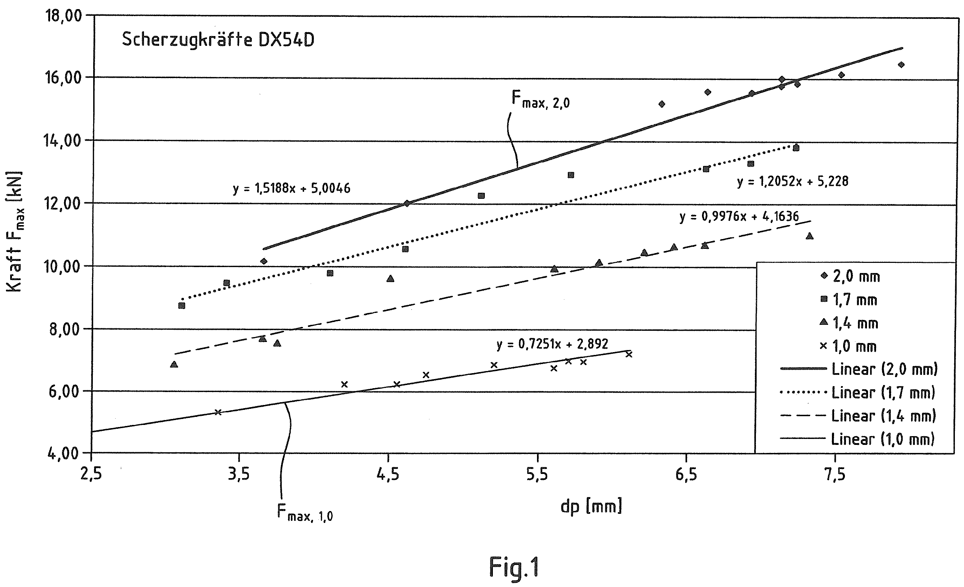

Im Diagramm in Fig. 1 sind die gemessenen Scherzugkräfte der Materialgüte DX54D gegen den Schweißpunktdurchmesser bei verschiedenen Blechdicken aufgetragen. Es fällt bei der Messung von Scherzugkräften von Schweißverbindungen unterschiedlicher Blechdicken, vorliegend von Blechdicken von 1,0 mm bis 2,0 mm auf, dass nicht nur eine Erhöhung der Scherzugkräfte mit zunehmender Blechdicke stattfindet, sondern auch eine Erhöhung der Steigung der in guter Näherung linear verlaufenden Abhängigkeit vom Schweißpunktdurchmesser $dp$. Dieses komplexe Verhalten erforderte es bisher, alle Blechdicken empirisch zu bewerten, um eine optimale Kombination von Blechdicken, Schweißpunktdurchmesser und Materialgüte für die spezifischen Belastungen einer Widerstandpunktschweißung herauszusuchen. Unter Verwendung des erfindungsgemäßen Verfahrens wird nun ermöglicht, lediglich die Ränder der Blechdickenintervalle zu vermessen, um daraus Rückschlüsse innerhalb des Blechdickenintervalls $t_i$ bis $t_{i+1}$ zu ermitteln. Erfindungsgemäß wird dabei angenähert eine sowohl in Bezug auf den Schweißpunktdurchmesser als auch auf die Blechdicke lineare Funktion $G(dp,t) = a \cdot dp + b \cdot t + c$ verwendet, die für ein bestimmtes Blechdickenintervall die maximale Traglast mit relativ geringem Fehler angibt. Im Weiteren soll nun gezeigt werden, wie diese relativ einfache Funktion aus den Messwerten an den Blechdickenrändern, beispielsweise in dem vorliegenden Ausführungsbeispiel aus den Messdaten der Blechdicken für 1,0 mm und 2,0 mm für die dazwischen liegenden Blechdicken ermittelt werden können.

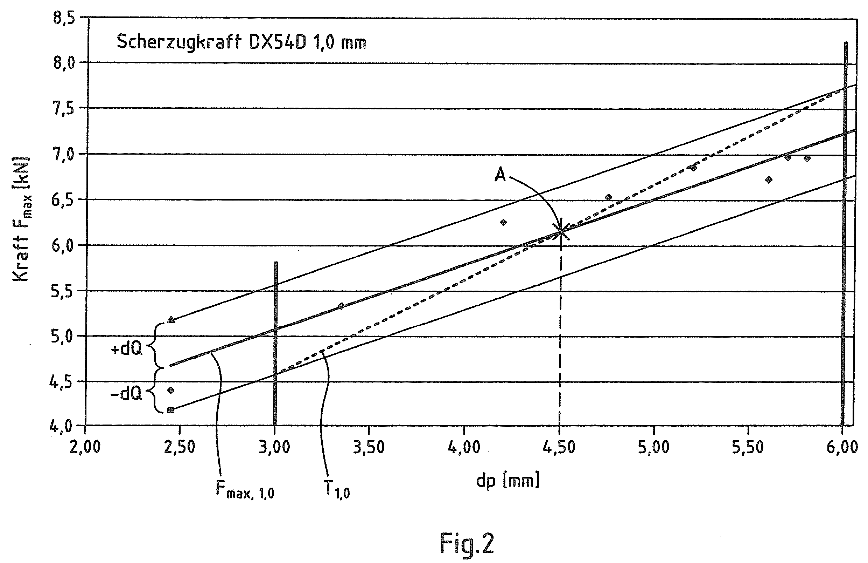

Hierzu wird, wie in Fig. 2 dargestellt, die Funktion $F_{max,t_i}(dp)$ bzw. $F_{max,1,0}(dp)$ ermittelt, also die Regressionsgerade der Scherzugkräfte in Abhängigkeit vom Schweißpunktdurchmesser bei der geringsten Blechdicke 1,0 mm für den Werkstoff DX54D. Anschließend wird ein Abweichungsintervall $+/- dQ$ bestimmt, welches vorliegend mit einem Wert von $+/- 0,75$ kN definiert wurde. In diesem Abweichungsintervall von $+/- 0,75$ kN sollen sich die Funktionswerte einer neuen Trendfunktion bewegen. Das Abweichungsintervall $dQ$ ist gleich bedeutend mit dem maximal zulässigen Fehler, welchen die neue Trendfunktion zur Regressionsgeraden annehmen kann. Die Trendfunktion $T_{1,0}$ wird so definiert, dass diese in der Mitte des Schweißpunktdurchmesserintervalls zwischen $dp_{min}$ und $dp_{max}$, vorliegend bei einem Schweißpunktdurchmesser von 4,5 mm, sich mit der Regressionsgrade $F_{max,1,0}$ schneidet. Hierdurch wird erreicht, dass sich die bevorzugten Bereiche des Schweißpunktdurchmessers von 4,0 mm bis 5,0 mm mit einem kleinen, symmetrisch um 4,5 mm verteilten Fehler behaftet sind. Die Trendfunktion $T_{1,0}$ wird nun so definiert, dass diese durch die Punkte $(dp_{min}/F_{max,UG,1,0}(dp_{min}))$ und durch den Punkt $(dp_{max} / F_{max,OG,1,0}(dp_{max}))$ verläuft, wie in Fig. 2 dargestellt ist. Mit anderen Worten die Trendfunktion für die niedrige Blechdicke 1,0 mm verläuft für den geringsten Schweißpunktdurchmesser $dp_{min}$ durch das Minimum der zugelassenen Werte und beim maximalen zugelassenen Schweißdurchmesser $dp_{max}$ durch die maximal zugelassenen Werte des Abweichungsintervalls $+/-dQ$. Im Ergebnis weist die neue Trendfunktion $T_{1,0}$ eine größere Steigung auf als die Regressionsgrade $F_{max,1,0}$.

In gleicher Weise verfährt man nun mit der maximalen Blechdicke 2,0 mm nur mit dem Unterschied, dass die zweite Trendfunktion $T_{2,0}$ durch die Punkte $(dp_{min}/F_{max,OG,2,0}(dp_{min}))$ und $(dp_{max}/F_{max,UG,2,0}(dp_{max}))$ verläuft. Mit anderen Worten bei der maximalen Blechdicke von 2,0 mm oder auch $t_{i+1}$, wird die Trendfunktion derart definiert, dass diese bei minimalen Schweißpunktdurchmesser $dp_{min}$ den maximalen Scherzugkraftwert annimmt und am maximalen Schweißpunktdurchmesser $dp_{max}$ einen minimalen Scherzugkraftwert innerhalb des zulässigen Abweichungsintervalls annimmt. Die Steigung der Trendfunktion $T_{2,0}$ ist damit geringer als die der zugehörigen Regressionsfunktion $F_{max,2,0}$. Die Blechdicke ti = 1,0 mm ist kleiner als die Blechdicke $t_{i,1}$ = 2,0 mm, wobei jedoch die neu ermittelten Steigungen der Trendfunktionen $T_{1,0}$ und $T_{2,0}$ sich gerade umgekehrt verhalten, nämlich die Steigung $m_{t_i}$ bzw. $m_{1,0}$ ist größer als die Steigung $m_{t_i+1}$ bzw. $m_{2,0}$.

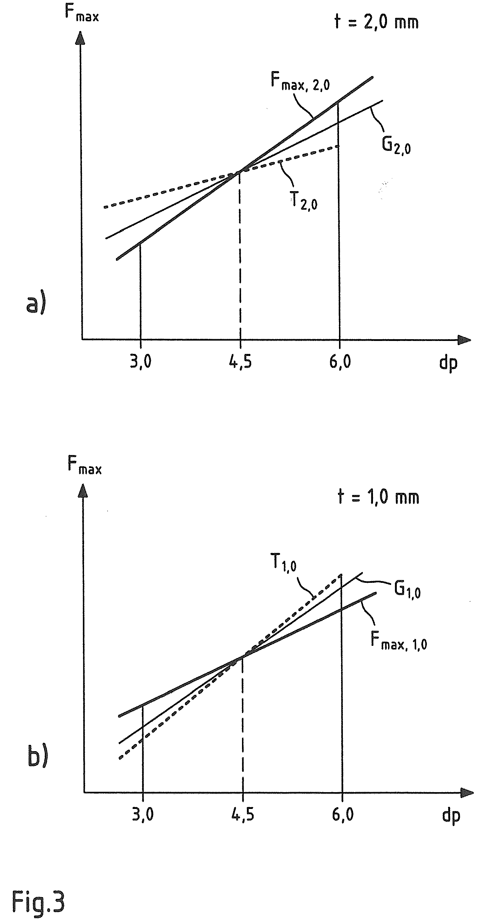

Weiter werden für jedes Blech neue Trendfunktionen bestimmt, welche dieses Mal jedoch identische Steigungen aufweisen. Die Steigung für die neue Trendfunktion $G_{t_i}$ wird aus den Steigungswerten $m_{t_i}$ und $m_{t_i+1}$ durch Bildung des Mittelwertes zwischen beiden Steigungen ermittelt. In der Fig. 3 ist im oberen Diagramm a) neben der Regressionsgrade $F_{max,2,0}$ sowohl die Trendfunktion $T_{2,0}$ als auch die Trendfunktion $G_{2,0}$ dargestellt, welche eine identische Steigung aufweist wie die Trendfunktion $G_{1,0}$ im unteren Diagramm b). Dies gilt auch für das untere Diagramm b), in welchem die Regressionsfunktion $F_{max,1,0}$ sowie die Funktion $T_{1,0}$ und $G_{1,0}$ dargestellt ist. In den Diagrammen der Fig. 3 ist zu erkennen, dass die Funktion $G_{2,0}$ bzw. $G_{1,0}$ derart definiert ist, dass diese den Entwicklungspunkt A, welcher in der Mitte des Schweißpunktdurchmesserintervalls angeordnet ist, die Regressionsgrade $F_{max}$ per Definition schneiden, denn für die neu definierte Trendfunktion $G_{t_i}(dp, t_i)$ gilt

$$G_{t_i}((dp_{max} + dp_{min})/2),t_i) = F_{max,t_i}((dp_{max} + dp_{min})/2) \ .$$

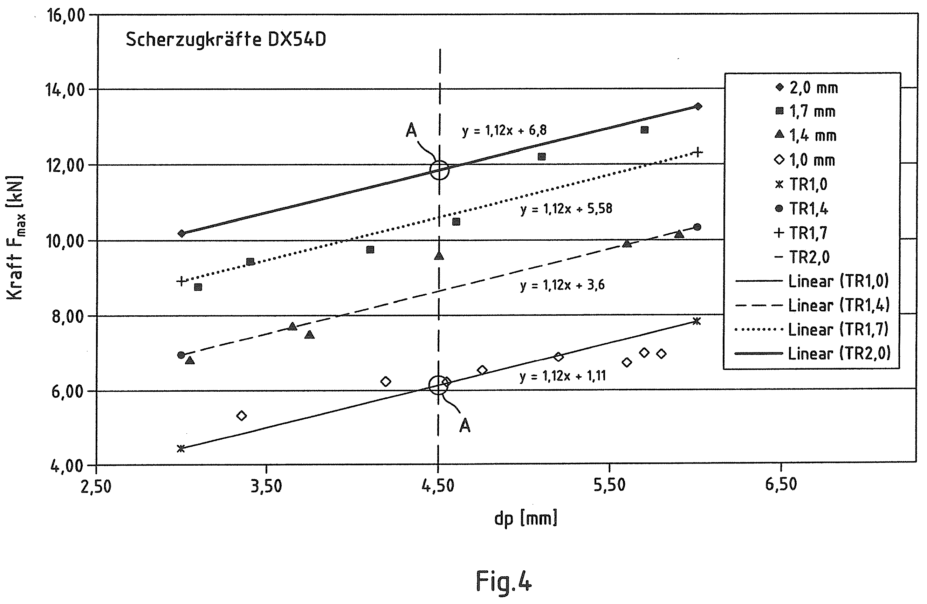

Betrachtet man nun die in Fig. 4 dargestellten, neu definierten Trendfunktionen $G_{t_i}$ für verschiedene Blechdicken, so fällt auf, dass diese per Definition zunächst parallel zueinander verlaufen. Damit unterscheiden sich die in Fig. 4 dargestellten Funktionen lediglich, wie im Diagramm der Fig. 4 angegeben, lediglich durch den y-Achsenabschnitt in ihrer mathematischen Darstellung. Es hat sich gezeigt, dass sich in sehr guter Näherung ein linearer Zusammenhang zwischen den sich ändernden y-Achsenabschnitten der Funktion $G_{t_i}$ und der Blechdicke ergibt. Dieser lässt sich am einfachsten am Entwicklungspunkt A in der Mitte des Schweißpunktdurchmesserintervalls $dp_{min}$ bis $dp_{max}$ ermitteln, da hier die Funktionswerte der Trendfunktionen $G_{t_i}$ per Definition die Funktionswerte der Regressionsgraden $F_{max}$ anneh-

men und daher bekannt sind. In dem Intervall von der Blechdicke t=1,0 mm bis t=2,0 mm lässt sich damit die maximale Traglast durch die folgende Funktion bestimmen:

$$G(dp,t) = m \cdot dp + b_{1,0} + b \cdot (t - 1,0) \ ,$$

wobei

$$m = (m_{1,0} + m_{2,0})/2$$

und

$$b = \frac{F_{max,2,0}((dp_{max} + dp_{min})/2) - F_{max,1,0}((dp_{max} + dp_{min})/2)}{2,0 - 1,0}$$

gilt. Anhand der Daten für die Blechdicken 1,0 mm und 2,0 mm lässt sich damit relativ genau für die Blechdicken 1,4 mm und 1,7 mm die maximale Zugkraft einer Schweißpunktverbindung mit vorgegebenem Schweißpunktdurchmesser mathematisch vorherbestimmen und entsprechend an die spezifischen Anforderungen der Schweißpunktverbindung anpassen. Es besteht daher die Möglichkeit ohne empirische Versuche in allen Blechdicken durch eine Vorhersage der maximalen Traglastkraft einer Schweißpunktverbindung die entsprechenden Materialgüten und Blechdicken auszuwählen.

Vorzugsweise wird dabei berücksichtigt, dass der minimale Schweißpunktdurchmesser $4 \cdot \sqrt{t}$ beträgt und der maximale Schweißpunktdurchmesser $6 \cdot \sqrt{t}$. Wie in dem Ausführungsbeispiel dargestellt, betragen die Blechdickenwerte 1,0 mm bis 2,0 mm denkbar sind aber auch andere Blechdickenintervalle.

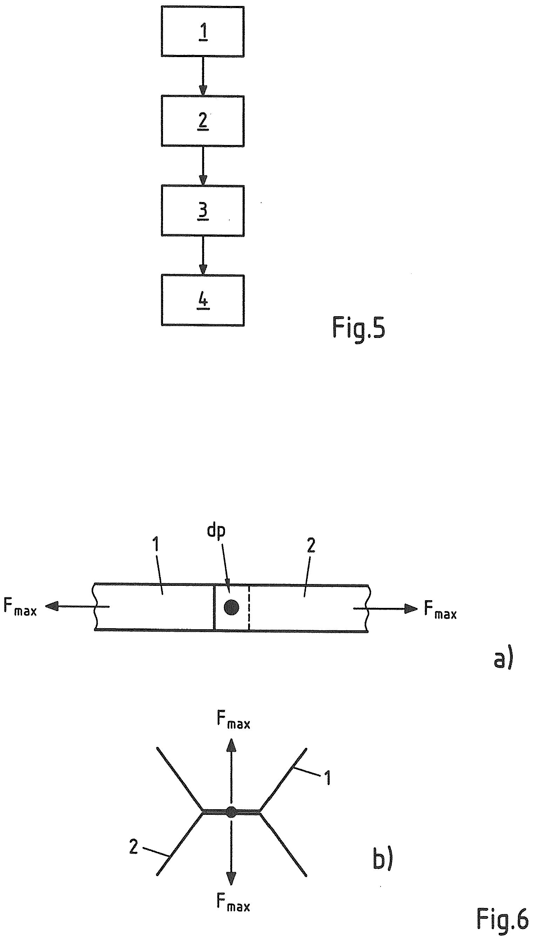

In Fig. 5 ist nun schematisch noch einmal das Auswahlverfahren dargestellt, mit welchen Kombinationen an Blechdicken und Materialgüten für spezifische Anforderungen der Traglast von Verbindungen berücksichtig werden können. Gemäß Schritt 1 werden spezifische Vorgaben für die Blechdicken, für die minimalen und maximalen Schweißpunktdurchmesser und die Materialgüte festgelegt. Beispielsweise können im Schritt 1 auch die für jede Materialgüte festliegenden Werte für die Zugfestigkeit und Dehngrenze berücksichtigt werden. In Schritt 2 werden die Scherzugversuche bzw. Kopfzugversuche durchgeführt, je nachdem, welche Belastung in der Anwendung im Vordergrund steht. Die entsprechenden Trendfunktionen $G_{t_i}(dp,t)$ für Blechdickenintervalle $(t_i, t_{i+1})$ auch für verschiedene Materialgüten werden ebenfalls in Schritt 2 ermittelt. In Schritt 3 werden dann die Trendfunktionen ausgewertet in Bezug auf mögliche Werte der Schweißverbindungen in dem Zielfenster, welches in Schritt 1 bereits vorgegeben wurde. Am Ende kann dann in Schritt 4 die entsprechenden Kombinationen an Blechdicken und Materialgüten sowie die Konfiguration der Schweißpunktdurchmesser, welche beispielsweise zu einer Schweißverbindung führen, deren maximale Traglast im Zielfensterbereich liegt, angegeben werden.

Anschließend kann beispielsweise diese Auswahl an Kombinationen von Blechdicken und Materialgüten erneut herangezogen werden, um in Bezug auf ein minimales Gewicht oder auch in Bezug auf vorgegebene Grenzen für Zugfestigkeit und Dehngrenze ausgewählt zu werden. Damit steht ein Verfahren zur Verfügung, mit welchem automatisiert spezifische Kombinationen an Blechdicken und Materialgüten zur Erzielung von maximalen Traglasten in den Schweißpunktverbindungen zur Verfügung gestellt werden können.

Schließlich zeigt Fig. 6 prinzipiell den Aufbau von Scherzug- bzw. Kopfzugversuchen. Es werden zwei Bleche 1,2 der gleichen Materialgüte und gleichen Dicke über einen Schweißpunkt 3 mit dem Schweißpunktdurchmesser dp verbunden. Anschließend werden die Proben in nicht dargestellte Probenhalter eingespannt und mit der maximalen Zugkraft entweder in Blechebene (Scherzugversuch) oder senkrecht zur Blechebene (Kopfzugversuch) auseinander gezogen. In der Regel werden pro Schweißpunktdurchmesser mehrere Zugversuche durchgeführt, um das Ergebnis der maximalen Zugkraft statistisch abzusichern.

## Patentansprüche

1. Verfahren zur Bestimmung von maximalen Traglastwerten für Blechverbindungen von Blechen aus einer Materialgüte in Abhängigkeit von mehreren Schweißparametern,

**dadurch gekennzeichnet, dass**

die Materialgüte abhängig von der Blechdicke $t$ und des Schweißpunktdurchmessers $dp$ ist, welche in einem Blechdickenintervall $(t_i, t_{i+1})$ für eine Materialgüte gilt, bei welchem aus Kopfzug- oder Scherzugdaten von Blechverbindungen mit verschiedenen Schweißpunktdurchmessern unter Verwendung einer linearen Regression der Kopfzug- oder Scherzugmessdaten von mindestens zwei verschiedenen Blechdicken $t_i$ und $t_{i+1}$, welche der oberen und der unteren Grenze des Blechdickenintervalls $(t_i, t_{i+1})$ entsprechen, eine gemeinsame Funktion für die maximale Traglast $G(dp, t)$ bestimmt wird, welche für ein Blechdickenintervall $(t_i, t_{i+1})$ und eine Materialgüte gilt und die Form hat:

$$G(dp,t) = a \cdot dp + b \cdot t + c \,,$$

wobei a, b und c von dp oder t unabhängige Variablen sind,
und wobei folgende Schritte durchgeführt werden:

- Durchführen einer Mehrzahl von Scherzug- oder Kopfzugversuchen zur Messung der maximalen Zugkraft $F_{\max}$ von gefügten Blechen mit verschiedenen Blechdicken im Blechdickenintervall $(t_i, t_{i+1})$ und verschiedenen Schweißpunktdurchmessern $dp$ innerhalb eines zulässigen Schweißpunktdurchmesserintervalls $(dp_{\min}, dp_{\max})$ bei der gleichen Materialgüte,
- Bestimmen einer linearen Regressionsfunktion der maximalen Zugkraft $F_{max,t_i}(dp)$ für mindestens zwei Blechdicken $t_i$ und $t_{i+1}$ einer Materialgüte,
- Festlegen eines Abweichungsintervalls mit oberer und unterer Grenze für die mindestens zwei Regressionsfunktionen, wobei für die obere Grenze gilt:

$$F_{\max,OG,t_i}\left(dp\right) = F_{\max,t_i}\left(dp\right) + dQ$$

und
für die untere Grenze gilt:

$$F_{\max,UG,t_i}\left(dp\right) = F_{\max,t_i}\left(dp\right) - dQ \,,$$

- Bestimmung einer ersten linearen Trendfunktion $T_{t_i}(dp)$ mit der Steigung $m_{t_i}$ für eine erste Blechdicke, welche durch die Punkte $(dp_{min} / F_{\max,UG,t_i}(dp_{min}))$ und $(dp_{max} / F_{\max,OGt_i}(dp_{max}))$ verläuft,
- Bestimmung einer zweiten linearen Trendfunktion $T_{t_i+1}(dp)$ mit der Steigung $m_{t_i+1}$ für eine zweite Blechdicke, welche durch die
Punkte $(dp_{min} / F_{\max,OG,t_i+1}(dp_{min}))$ und $(dp_{max} / F_{\max,UG,t_i+1}(dp_{max}))$ verläuft,
- wobei die erste Blechdicke $t_i$ geringer als die zweite Blechdicke $t_{i+1}$ und die Steigung $m_{t_i}$ größer als die Steigung $m_{t_i+1}$ ist,
- Bestimmung einer weiteren Trendfunktion $G_{t_i}(dp,t_i) = m \cdot dp + b_{t_i}$ mindestens für zwei Blechdicken $(t_i)$ und $(t_{i+1})$, mit

a)

$$G_{t_i}((dp_{\max} + dp_{\min})/2), t_i) = F_{\max,t_i}((dp_{\max} + dp_{\min})/2)$$

und
b)

$$G_{t_{i+1}}(dp,t) = G_{t_i}(dp,t_i) + b(t) \,,$$

wobei

$$m = (m_i + m_{i+1})/2,$$

$$b(t) = b \cdot (t - t_i)$$

und

$$b = \frac{F_{max,t_{i+1}}((dp_{max} + dp_{min})/2) - F_{max,t_i}((dp_{max} + dp_{min})/2)}{t_{i+1} - t_i},$$

so dass $G_{t_{i+1}}(dp,t) = m \cdot dp + b_{t_i} + b \cdot (t - t_i)$ die maximale Zugkraft einer Blechverbindung abhängig von der Blechdicke innerhalb des Blechdickenintervalls $(t_i, t_{i+1})$ und abhängig von dem Schweißpunktdurchmesser $dp$ angibt.

2. Verfahren nach Anspruch 1,
**dadurch gekennzeichnet, dass**

als Untergrenze des Schweißpunktdurchmessers $dp_{min}$ der Wert $4 \cdot \sqrt{t}$ und als Obergrenze des Schweißpunktdurchmessers $dp_{max}$ der Wert $6 \cdot \sqrt{t}$ verwendet wird.

3. Verfahren nach Anspruch 1 oder 2,
**dadurch gekennzeichnet, dass**
die Trendfunktion $G_{t_{i+1}}(dp,t)$ für verschiedene Materialgüten und/oder für verschiedene Blechdickenintervalle $(t_i, t_{i+1})$ ermittelt wird.

4. Verfahren nach Anspruch 1 bis 3,
**dadurch gekennzeichnet, dass**
das Blechdickenintervall $(t_i, t_{i+1})$ Blechdickenwerte zwischen 0,5 mm und 2,5 mm, vorzugsweise von 1,0 mm bis 2,0 mm angibt.

5. Verfahren nach Anspruch 1 bis 4,
**dadurch gekennzeichnet, dass**
die verschiedenen Blechdicken im Blechdickenintervall $(t_i, t_{i+1})$ durch Herunterschleifen aus einem einzigen Blech bereitgestellt werden.

6. Verfahren zur Auswahl einer Kombination von Blechdicken und Materialgüten für die Bereitstellung von Blechverbindungen mit einer vorbestimmten maximalen Traglast, bei welchem zunächst die Trendfunktionen $G_{t_i}(dp,t)$ für Blechdickenintervalle $(t_i, t_{i+1})$ und für verschiedene Materialgüten gemäß einem der Ansprüche 1 bis 5 ermittelt werden, und anschließend die Blechdickenkombinationen und Materialgüten durch Auswertung der Trendfunktionen $G_{t_i}(dp,t)$ ermittelt werden, welche die Vorgaben bezüglich der maximalen Traglast erfüllen.

7. Verfahren nach Anspruch 6,
**dadurch gekennzeichnet, dass**
eine Kombination an Blechdicken und Materialgüte ausgewählt wird, welche die Vorgaben an die maximale Traglast bei minimalem Gewicht realisiert.

8. Verfahren nach Anspruch 7,
**dadurch gekennzeichnet, dass** Vorgaben der Zugfestigkeit $R_m$ und Dehngrenze $R_e$ der Materialgüte berücksichtigt werden.

**Claims**

1. A method for determining maximum bearing load values for metal sheet connections of metal sheets from a material quality as a function of multiple welding parameters,
**characterized in that**

the material quality is dependent on the metal sheet thickness $t$ and the weld spot diameter $dp$, which applies for a material quality in a metal sheet thickness interval $(t_i, t_{i+1})$, in which from head tension or shear tension data of metal sheet connections with different weld spot diameters using a linear regression of the head tension or shear tension measurement data of at least two different metal sheet thicknesses $t_i$ and $t_{i+1}$, which correspond to the upper and the lower limit of the metal sheet thickness interval $(t_i, t_{i+1})$, a shared function is determined for the maximum bearing load $G(dp,t)$, which applies for a metal sheet thickness interval $(t_i, t_{i+1})$ and has the form:

$$G(dp,t) = a \cdot dp + b \cdot t + c \,,$$

wherein a, b and c are variables independent of dp or t,
and wherein the following steps are carried out:

- carrying out a plurality of shear tension or head tension tests for measuring the maximum tensile force $F_{max}$ of joined metal sheets with different metal sheet thicknesses in the metal sheet thickness interval $(t_i, t_{i+1})$ and different weld spot diameters $dp$ within a permissible weld spot diameter interval $(dp_{min}, dp_{max})$ with the same material quality,
- determining a linear regression function of the maximum tensile force $F_{max,t_i}(dp)$ for at least two metal sheet thicknesses $t_i$ and $t_{i+1}$ of a material quality,
- establishing a deviation interval with upper and lower limit for the at least two regression functions, where the following applies for the upper limit:

$$F_{max,OG,t_i}\left(dp\right) = F_{max,t_i}(dp) + dQ$$

and for the lower limit, the following applies:

$$F_{max,UG,t_i}\left(dp\right) = F_{max,t_i}(dp) - dQ \,,$$

- determining of a first linear trend function $T_{t_i}(dp)$ with the gradient $m_{t_i}$ for a first metal sheet thickness, which runs through the points $(dp_{min}/F_{max,UG,t_i}(dp_{min}))$ and $(dp_{max} / F_{max,OG,t_i}(dp_{max}))$,
- determining of a second linear trend function $T_{t_{i+1}}(dp)$ with the gradient $m_{t_{i+1}}$ for a second metal sheet thickness, which runs through the points $(dp_{min} / F_{max,OG,t_{i+1}}(dp_{min}))$ and $(dp_{max} / F_{max,UG,t_{i+1}}(dp_{max}))$,
- wherein the first metal sheet thickness $t_i$ is less than the second metal sheet thickness $t_{i+1}$, and the gradient $m_{t_i}$ is greater than the gradient $m_{t_{i+1}}$
- determining a further trend function $G_{t_i}(dp,t_i) = m \cdot dp + b_{t_i}$ for at least for two metal sheet thicknesses $(t_i)$ and $(t_{i+1})$, with

a)

$$G_{t_i}((dp_{max} + dp_{min})/2),t_i) = F_{max,t_i}((dp_{max} + dp_{min})/2)$$

and
b)

$$G_{t_{i+1}}(dp,t) = G_{t_i}(dp,t_i) + b(t)\,,$$

wherein

$$m = (m_i + m_{i+1})/2 \,,$$

$$b(t) = b \cdot (t - t_i)$$

and

$$b = \frac{F_{\max, t_{i+1}}((dp_{\max} + dp_{\min})/2) - F_{\max, t_i}((dp_{\max} + dp_{\min})/2)}{t_{i+1} - t_i},$$

so that $Gt_{i+1}(dp, t) = m \cdot dp + b_{t_i} + b \cdot (t - t_i)$ indicates the maximum tensile force of a metal sheet connection dependent on the metal sheet thickness within the metal sheet thickness interval $(t_i, t_{i+1})$ and dependent on the weld spot diameter $dp$.

2. The method according to Claim 1,
   **characterized in that**
   as lower limit of the weld spot diameter $dp_{\min}$ the value $4 \cdot \sqrt{t}$ is used, and as upper limit of the weld spot diameter $dp_{\max}$ the value $6 \cdot \sqrt{t}$ is used.

3. The method according to Claim 1 or 2,
   **characterized in that**
   the trend function $G_{t_{i+1}}(dp, t)$ is determined for different material qualities and/or for different metal sheet thickness intervals $(t_i, t_{i+1})$.

4. The method according to Claim 1 to 3,
   **characterized in that**
   the metal sheet thickness interval $(t_i, t_{i+1})$ indicates metal sheet thickness values between 0.5 mm and 2.5 mm, preferably of 1.0 mm to 2.0 mm.

5. The method according to Claim 1 to 4,
   **characterized in that**
   the different metal sheet thicknesses in the metal sheet thickness interval $(t_i, t_{i+1})$ are provided by grinding down from a single metal sheet.

6. A method for the selection of a combination of metal sheet thicknesses and material qualities for the provision of metal sheet connections with a predetermined maximum bearing load, in which firstly the trend functions $G_{t_i}(dp, t)$ for metal sheet thickness intervals $(t_i, t_{i+1})$ and for different material qualities are determined according to one of Claims 1 to 5, and subsequently the metal sheet thickness combinations and material qualities are determined by evaluation of the trend functions $G_{t_i}(dp, t)$, which meet the requirements with regard to the maximum bearing load.

7. The method according to Claim 6,
   **characterized in that**
   a combination of metal sheet thicknesses and material quality is selected, which realizes the requirements for the maximum bearing load with minimal weight.

8. The method according to Claim 7,
   **characterized in that**
   requirements of the tensile strength $R_m$ and yield limit $R_e$ of the material quality are taken into consideration.

**Revendications**

1. Procédé de définition de valeurs de charge porteuse maximales pour des connecteurs de tôle constitués d'une qualité de matériau en fonction de plusieurs paramètres de soudure,
   **caractérisé en ce que**
   la qualité du matériau dépend de l'épaisseur de la tôle $t$ et du diamètre de point de soudure $dp$ qui s'applique dans un intervalle d'épaisseur de tôle $(t_i, t_{i+1})$ pour une qualité de matériau, dans lequel, à partir de données de traction de tête ou de traction de cisaillement de connecteurs de tôle ayant différents diamètres de point de soudure, en utilisant une régression linéaire des données de mesure de traction de tête ou de traction de cisaillement d'au moins deux épaisseurs de tôle différentes $t_i$ et $t_{i+1}$ qui correspondent à la limite supérieure et la limite inférieure de l'intervalle d'épaisseur de tôle $(t_i, t_{i+1})$, une fonction commune est définie pour la charge porteuse maximale $G(dp, t)$ qui s'applique pour un intervalle d'épaisseur de tôle $(t_i, t_{i+1})$ et une qualité de matériau et a la forme suivante :

$$G(dp,t) = a \cdot dp + b \cdot t + c,$$

sachant que a, b et c sont des variables indépendantes de dp ou t et sachant que les étapes suivantes sont réalisées :

- réalisation d'une pluralité d'essais de traction de cisaillement ou de traction de tête pour mesurer la force de traction maximale $F_{max}$ de tôles jointes ayant différentes épaisseurs de tôle dans l'intervalle d'épaisseur de tôle $(t_i, t_{i+1})$ et différents diamètres de points de soudure $dp$ dans un intervalle de diamètre de points de soudure admissible $(dp_{min}, dp_{max})$ avec la même épaisseur de matériau,
- définition d'une fonction de régression linéaire de la force de traction maximale $F_{max,t_i}(dp)$ pour au moins deux épaisseurs de tôle $t_i$ et $t_{i+1}$ d'une qualité de matériau,
- définition d'un intervalle d'écart avec une limite supérieure et inférieure pour les au moins deux fonctions de régression, sachant que ce qui suit s'applique pour la limite supérieure :

$$F_{\max,OG,t_i}\big(dp\big) = F_{\max,t_i}\big(dp\big) + dQ$$

et ce qui suit s'applique pour la limite inférieure :

$$F_{\max,UG,t_i}\big(dp\big) = F_{\max,t_i}\big(dp\big) - dQ$$

- définition d'une première fonction de tendance linéaire $T_{t_i}(dp)$ avec la pente $m_{t_i}$ pour une première épaisseur de tôle qui passe par les points $(dp_{min} / F_{max,UG,ti}(dp_{min}))$ et $(dp_{max} / F_{max,OG,ti}(dp_{max}))$,
- définition d'une seconde fonction de tendance linéaire $T_{t_{i+1}}(dp)$ avec la pente $m_{t_{i+1}}$ pour une seconde épaisseur de tôle qui passe par les points $(dp_{min} / F_{max,OG,ti+1}(dp_{min}))$ et $(dp_{max} / F_{max,UG,ti+1}(dp_{max}))$,
- la première épaisseur de tôle $t_i$ étant inférieure à la seconde épaisseur de tôle $t_{i+1}$ et la pente $m_{t_i}$ étant supérieure à la pente $m_{t_{i+1}}$,
- définition d'une autre fonction de tendance $G_{t_i}(dp, t_i) = m \cdot dp + b_{t_i}$ au moins pour deux épaisseurs de tôle $(t_i)$ et $((t_{i+1})$ avec

a)

$$G_{t_i}\big((dp_{\max} + dp_{\min})/2, t_i\big) = F_{\max,t_i}\big((dp_{\max} + dp_{\min})/2\big)$$

et
b)

$$G_{t_{i+1}}(dp, t) = G_{t_i}(dp, t_i) + b(t),$$

sachant que

$$m = (m_i + m_{i+1})/2 ,$$

$$b(t) = b \cdot (t - t_i) \text{ et}$$

$$b = \frac{F_{\max,t_{i+1}}((dp_{\max} + dp_{\min})/2) - F_{\max,t_i}((dp_{\max} + dp_{\min})/2)}{t_{i+1} - t_i},$$

de sorte que $Gt_{i+1}(dp,t) = m \cdot dp + b_{t_i} + b \cdot (t-t_i)$ indique la force de traction maximale d'un connecteur de tôle en fonction de l'épaisseur de tôle dans l'intervalle d'épaisseur de tôle $(t_i, t_{i+1})$ et en fonction du diamètre du point de soudure *dp*.

2. Procédé selon la revendication 1,
   **caractérisé en ce que**
   qu'on utilise comme limite inférieure du diamètre de point soudure $dp_{\min}$ la valeur $4 \cdot \sqrt{t}$ et comme limite supérieure
   du diamètre de point de soudure $dp_{\max}$ la valeur $6 \cdot \sqrt{t}$.

3. Procédé selon la revendication 1 ou 2,
   **caractérisé en ce que**
   la fonction de tendance $Gt_{i+1}(dp,t)$ est déterminée pour différentes qualités de matériau et/ou pour différents intervalles d'épaisseur de tôle $(t_i, t_{i+1})$.

4. Procédé selon les revendications 1 à 3,
   **caractérisé en ce que**
   l'intervalle d'épaisseur de tôle $(t_i, t_{i+1})$ indique des valeurs d'épaisseur de tôle de 0,5 mm à 2,5 mm, de préférence de 1,0 mm à 2,0 mm.

5. Procédé selon les revendications 1 à 4,
   **caractérisé en ce que**
   les différentes épaisseurs de tôle dans l'intervalle d'épaisseur de tôle $(t_i, t_{i+1})$ sont établies par rectification dans une seule tôle.

6. Procédé de sélection d'une combinaison d'épaisseurs de tôle et de qualités de matériaux pour la création de connecteurs de tôle ayant une force porteuse maximale prédéfinie, la dans lequel on détermine d'abord les fonctions de tendance $G_{ti}(dp,t)$ pour les intervalles d'épaisseur de tôle $(t_i, t_{i+1})$ et pour différentes qualités de matériau selon une des revendications 1 à 5 puis on détermine ensuite les combinaisons d'épaisseurs de tôle et de qualités de matériaux en exploitant les fonctions de tendance $G_{t_i}(dp,t)$ qui répondent aux prescriptions concernant la force porteuse maximale.

7. Procédé selon la revendication 6,
   **caractérisé en ce**
   **qu'**on sélectionne une combinaison d'épaisseurs de tôle et de qualités de matériaux qui remplit les prescriptions de charge porteuse maximale avec un poids minimal.

8. Procédé selon la revendication 7,
   **caractérisé en ce**
   **qu'**on tient compte de prescriptions de résistance à la traction $R_m$ et de limite d'étirement $R_e$ de la qualité de matériau.

Fig.1

EP 2 720 025 B1

Fig.2

Fig.3

Fig.4

Fig.5

a)

b)

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1392455 B1